# EUROPEAN PATENT APPLICATION

(11) **EP 4 253 996 A1**
(43) Date of publication of application: **04.10.2023**
(21) Application number: 22873102.2
(22) Date of filing: 08.08.2022
(51) Int. Cl.: G01S 7/41, G01S 13/75, G01S 13/44, G01S 13/88, G08G 1/01

(54) **SYSTEM FOR DETECTING BLACK ICE ON ROAD USING BEAMFORMING ARRAY RADAR**

(30) Priority: 27.09.2021 KR 20210127457
(71) Applicant: Skytrio Co. Ltd., Daejeon 34076 (KR)
(72) Inventor: KIM, Tai Hyung, Daejeon 34189 (KR)
(74) Representative: Lavoix
(86) International application number: PCT/KR2022/011726
(87) International publication number: WO 2023/048397

(57) **Abstract**

Disclosed herein is a black ice detection system, and more particularly, a system for detecting black ice on roads, which is capable of using a reflector and beamforming array radar installed along a road so as to measure a change in permittivity depending on the change of state of water and ice on the road and to warn of and take an appropriate action with regard to freezing conditions by detecting the same.

## Description

### BACKGROUND OF THE INVENTION

### Field of the Invention

The present invention relates to a black ice detection system, and more particularly, to a system for detecting black ice on roads, which is capable of using a reflector and beamforming array radar installed along a road so as to measure a change in permittivity depending on the change of state of water and ice on the road and to warn of and take an appropriate action with regard to freezing conditions by detecting the same.

### Description of the Related Art

"Black ice" refers to a phenomenon related to freezing of a road in which snow or rain freezes thinly on an asphalt road by seeping into cracks in the road and then mixing with dust or the like. It is difficult to identify black ice with the naked eye because black ice has the same color as asphalt used for a typical paved road, and a road with black ice thereon is slipperier than a snowy road. This serves as a secondary and tertiary cause in high-speed accidents, leading to major accidents causing great damage.

Accidents caused by black ice mainly occur when a driver thinks that a road with black ice thereon is merely wet with water and travels accordingly or when a driver passes over black ice remaining in a dark place, such as in a tunnel or under a bridge, without noticing the same, due to the difference in temperature between a place exposed to the sun and a shady place. It is known that roads with black ice thereon are 6 times slipperier than snowy roads and 14 times slipperier than normal roads without snow.

It is impossible in practice to artificially control the occurrence of black ice since it is closely related to weather and the environment. There have been attempts to take countermeasures by predicting the occurrence of black ice using climate observation data in recent years, but the accuracy thereof is not high yet because black ice does not occur in all predicted sections and periods.

National and local governments are taking countermeasures, such as burying hot wires, spraying salt water, and grooving in roads, after identifying vulnerable points such as areas of habitual freezing or frequent accidents. However, there are limitations as there is no way to know when and where black ice will occur, so ultimately, identification by the driver remains necessary. Hence, there is no specific countermeasure other than a method of urging a driver to carefully drive at a speed much lower than the usual driving speed.

### SUMMARY OF THE INVENTION

Therefore, the present invention has been made in view of the above problems, and it is an object of the present invention to provide a system for detecting black ice on roads using beamforming array radar, which is capable of precisely detecting black ice formed on a road as well as detecting black ice over a wide road area at low cost by analyzing interference between a first reflected wave directly reflected from a reflector and a second reflected wave sequentially reflected from the reflector and the road.

In accordance with the present invention, the above and other objects can be accomplished by the provision of a system for detecting black ice on roads, which includes a radar device installed on one side of a road and including a transmitter configured to transmit radio waves toward the road and a receiver configured to collect radio waves reflected from an object after transmission, a reflector installed opposite the radar device with the road therebetween and having radio wave reflection characteristics, and a controller including a storage unit and a determination unit, the storage unit being configured to store an interference wave generated by interference between a first reflected wave directly reflected from the reflector after transmission by the transmitter and a second reflected wave sequentially reflected from the reflector and the road, the determination unit being configured to determine whether black ice is present by analyzing the interference wave to check a road condition.

The controller may further include a timer configured to operate the radar device every set time and to store an interference wave by time, and an extraction unit configured to extract a reference signal corresponding to a normal road without black ice by analyzing a change in interference wave by time. The determination unit may be configured to determine the road condition by comparing the received interference wave with the reference signal.

The reflector may be a corner reflector composed of three conductive plates orthogonal to each other, and may consist of a plurality of reflectors fixedly installed at set intervals along the road.

The radar device may further include a direction changing unit configured to change a direction of emission and collection of radio waves in response to the installation position of each of the reflectors. The controller may further include a position check unit connected to the direction change unit to output a result of condition determination for each position of the road.

The controller may further include a vehicle detection unit configured to detect that a vehicle approaches and passes the road to control the radar device to operate when there is no vehicle.

The controller may further include a collection unit configured to collect weather information including temperature and humidity, and an information connection unit configured to analyze the weather information to activate the radar device under a condition in which black ice is likely to occur.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a conceptual view of the present invention;
FIG. 2 is a perspective view illustrating an installed state according to an embodiment of the present invention;
FIG. 3 is a block diagram illustrating a configuration and a connection relationship according to the embodiment of the present invention; and
FIG. 4 is a block diagram illustrating a configuration and a connection relationship according to another embodiment of the present invention.

### DETAILED DESCRIPTION OF THE INVENTION

Hereinafter, a system for detecting black ice on roads using beamforming array radar according to the present invention will be described in detail with reference to the accompanying drawings.

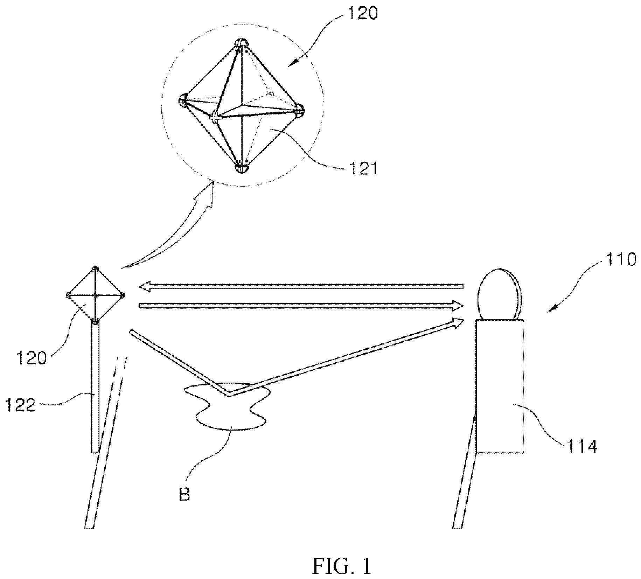

FIG. 1 is a conceptual view of the present invention. The present invention is based on digital beamforming array radar that is installed on a road where black ice is likely to occur, for example, in a place where freezing occurs frequently in winter in order to accurately identify and respond to freezing conditions such as black ice by measuring a change in permittivity depending on the change of state of water and ice on the road.

To this end, in order for radio waves to cross the road, a radar device 110 is installed on one side of the road and a reflector 120 having a large radar cross section (RCS) is installed on the other side thereof.

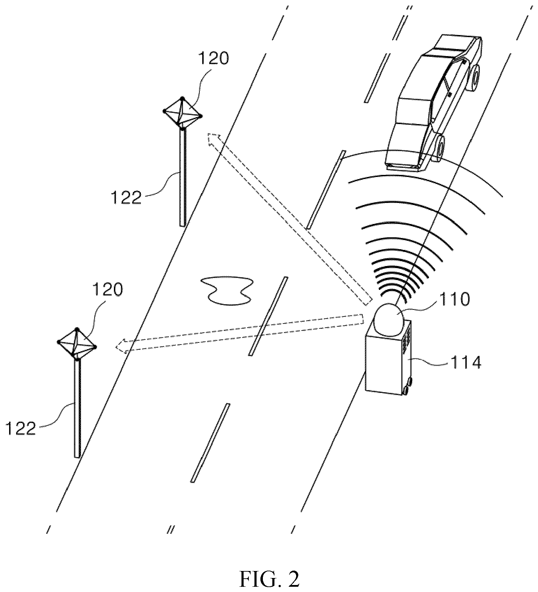

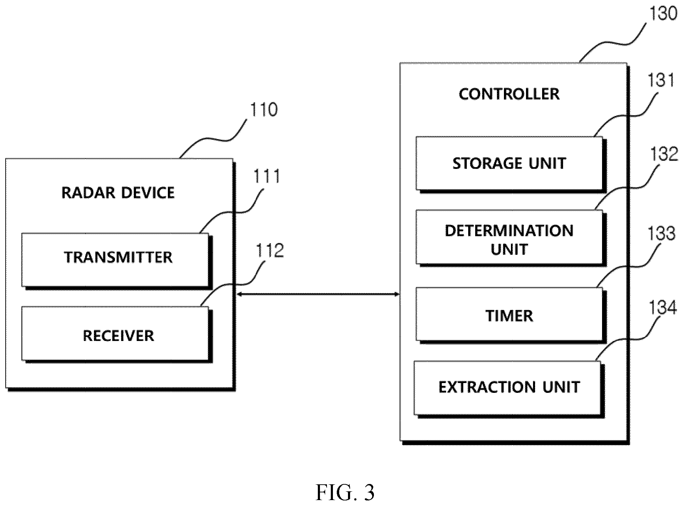

FIG. 2 is a perspective view illustrating an installed state according to the present invention. FIG. 3 is a block diagram illustrating a configuration and a connection relationship according to the embodiment of the present invention. The system for detecting black ice on roads according to the present invention includes a radar device 110, a reflector 120, and a controller 130 in a basic configuration.

The radar device 110 is beamforming array radar installed on one side of the road, and includes a transmitter 111 that transmits radio waves toward the road and a receiver 112 that collects radio waves reflected from an object after transmission. The transmitter uses an ISM band of 1 to 100 GHz as a transmission frequency, and preferably uses a 20 to 25 GHz band as an effective frequency range for detection of black ice.

The radar device 110 is installed at a predetermined height through an installation structure 114, and the installation structure 114 may have wheels installed thereunder to be movable as necessary.

The reflector 120 is installed opposite the radar device 110 with the road therebetween and is configured to reflect the radio waves transmitted by the transmitter 111 of the radar device. In the present invention, a corner reflector having excellent radio wave reflection characteristics is used as the reflector.

The corner reflector is configured in the form of three conductive plates 121 meeting each other at right angles as illustrated in the accompanying drawings. The corner reflector serves to reflect the transmitted radio waves to effectively return the radio waves back to wave sources. The corner reflector is a device that is used for the purpose of more reliable position measurement in typical radar observation.

The reflector 120 is installed at a predetermined height above the ground through a pillar-shaped support 122.

That is, the radar device 110 is installed on one side of the road and the reflector 120 is installed on the other side of the road, with the road in between. In this state, the radar device 110 transmits radio waves toward the reflector 120 across the road therebetween, so as to analyze the radio waves to detect black ice.

To this end, the controller 130 is configured together with the radar device 110 to process signals and to control the radar device 110. The controller 130 includes a storage unit 131, a determination unit 132, a timer 133, and an extraction unit 134 in a basic configuration.

The present invention detects black ice by utilizing an interference wave generated by the interference between a first reflected wave directly reflected from the reflector 120 after transmission by the transmitter 111 and a second reflected wave sequentially reflected from the reflector 120 and the road. The interference wave generated by the interference between the first reflected wave and the second reflected wave is stored in the storage unit 131 as a memory. The determination unit 132 then determines whether black ice is present by analyzing the interference wave to check road conditions.

That is, the first and second reflected waves are simultaneously received in the receiver 112 within the width of radar beams emitted by the transmitter 111. In this case, the received IQ signal is changed in phase due to mutual interference between the first reflected wave and the second reflected wave, which is considered an interference wave in the present invention. It is known that the phase change of the interference wave is particularly large in a frequency band of 20 GHz due to the change in permittivity depending on the change of state of moisture on the road. The phase of the interference wave differs for each of dry road conditions, the presence of water, and the presence of ice. Therefore, this enables road conditions to be accurately determined.

As such, in order to determine the road conditions according to the phase of the interference wave, a method of comparing an interference wave collected in each condition with the interference wave set as a reference signal may be used.

To this end, the timer 133 is configured to operate the radar device 110 every set time and to store an interference wave by time. The extraction unit 134 extracts a reference signal corresponding to the normal road without black ice by analyzing a change in interference wave by time.

For application of the reference signal, the reference signal may be extracted from data that is collected and stored in advance by reflecting the general conditions of the road in the process of manufacturing the system, or may be extracted from data that is collected over time after the system is installed on the site.

Consequently, the interference wave collected from each of the above-mentioned dry road, wet road, and icy road is stored and analyzed to extract the reference signal that will be used as a criterion for determining the road condition in the future.

Correspondingly, the determination unit 132 determines the road condition by comparing the interference wave received in real time with the reference signal, and determines the current road condition by comparing the phase of the interference wave with a phase of the reference signal, namely, the signal collected and extracted in advance from each of the dry road, the wet road, and the ice road for analyzing the same.

When the determination unit 132 determines that ice, namely, black ice is present on the road, the result of the determination may be output through a visual warning means such as an electronic display or a warning light or an audible warning means such as a warning sound, which is identifiable by a driver passing through that site, so as to warn the driver to be careful, or may be transmitted to a related agency that manages the road and to a designated terminal to take countermeasures.

In addition, the system may be installed on the site and connected to an unmanned snow/ice removal device, such as a means of spraying salt water or deicing agents, to ensure removal of black ice.

In this case, if black ice is present over a relatively long section, there is a limit to the range that is monitorable by a single radar device and reflector. Thus, in order to expand the monitoring range, it may be considered to have multiple radar devices or to continuously change radar positions, but this greatly reduces the economic efficiency due to expensive radar.

Accordingly, the present invention proposes a method for efficiently expanding a monitoring area by fixedly installing one expensive radar device and a number of relatively inexpensive reflectors 120 corresponding thereto at set intervals along the road.

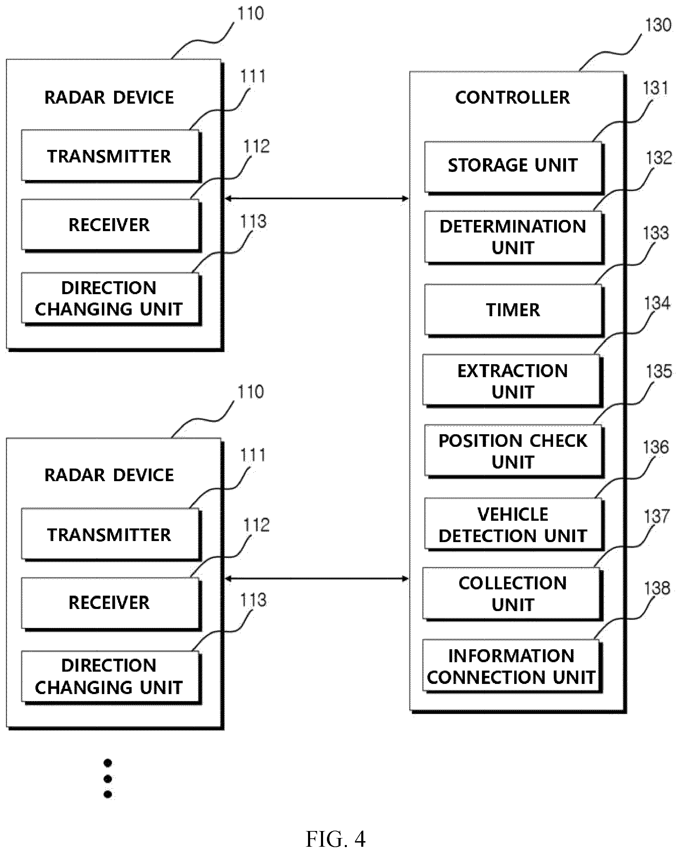

FIG. 4 is a block diagram illustrating a configuration and a connection relationship according to another embodiment of the present invention. In the drawing, an additional configuration for efficient operation is reflected along with the expansion of the monitoring area. The present embodiment has the same configuration as the previous embodiment except for an additional configuration.

In order to correspond to the installation of each reflector 120, the radar device 110 is provided with a direction changing unit 113 configured to change a direction of emission and collection of radio waves in response to the installation position of the reflector. That is, as mentioned above, the transmitter 111 and the receiver 112 provided in the radar device 110 are basically set to face the reflector 120. Moreover, as a plurality of reflectors are installed, the direction changing unit 113 including a control motor may be configured beneath the transmitter 111 and the receiver 112 to change the direction thereof so that the transmitter 111 and the receiver 112 face each of the reflectors.

That is, the direction change unit 113 may be configured beneath the transmitter 111 and the receiver 112 to laterally change the direction thereof so that the transmitter 111 and the receiver 112 stop at a position facing each reflector 120 for a certain period of time to transmit and receive radio waves. For example, when four reflectors are installed at intervals of about ten meters, the direction changing unit may sequentially reciprocate between four corresponding points facing the respective reflectors so that the transmitter and receiver face each of the reflectors and temporarily stop during transmission and reception of radio waves.

Correspondingly, the controller 130 is provided with a position check unit 135 connected to the direction change unit 113 to output a result of condition determination for each position of the road. That is, the interference wave collected from each reflector in response to the installation thereof may be separately processed for each reflector position checked by the direction changing unit 113 and the position check unit 135, thereby determining the condition for each position of the road through the reflector to accurately identify the presence of black ice.

The road condition may be accurately determined when there are virtually no vehicles traveling on the road. That is, there is no need to operate the radar device when the vehicle is located on the road. Accordingly, the controller 130 may further include a vehicle detection unit 136 configured to detect that a vehicle approaches and passes the road to control the radar device 110 to operate when there is no vehicle.

The vehicle detection unit 136 is a sensor capable of detecting the approach of the vehicle, and may be implemented through a kind of radar sensor specialized for vehicle detection. The vehicle detection unit 136 detects the approaching vehicle so as to smoothly determine the road condition, and controls the radar device 110 so as not to operate when the approach of the vehicle is detected. In conclusion, the vehicle detection unit 136 allows the radar device 110 to operate only in the absence of the vehicle to accurately receive and analyze the interference wave.

In addition, in order to prevent unnecessary operation under a condition in which black ice does not occur due to weather conditions, the controller 130 may further include a collection unit 137 that collects weather information including temperature and humidity, and an information connection unit 138 that analyzes the weather information to activate the radar device 110 under a condition in which black ice is likely to occur.

In this case, the collection unit 137 may be composed of a temperature sensor and a humidity sensor that may measure the temperature and humidity of the site, and may be connected to a site providing meteorological information to collect meteorological information including the temperature and humidity of the area in which the system is installed.

In addition, the information connection unit 138 compares the previously checked occurrence condition of black ice and the weather information collected by the collection unit 137 to determine whether black ice is generated on the site. The information connection unit 138 stops the operation of the radar device 110 when black ice is unlikely to occur and periodically operates the radar device 110 only when black ice is likely to occur, so as to monitor the road and efficiently operate the system.

As is apparent from the above description, according to the present invention, it is possible to precisely detect black ice formed on the road in winter and to connect the result of the detection to the warning and response means to effectively prevent accidents caused by black ice, thereby protecting people and property.

In particular, the system is established in such a manner that multiple relatively inexpensive reflectors are installed along the road while only one expensive radar device is provided. Therefore, it is possible to effectively detect black ice at low cost as well as detecting black ice over a wide road area.

Although the present invention has been described with respect to specific embodiments, it will be apparent to those skilled in the art that various variations and modifications may be made without departing from the spirit and scope of the invention as defined in the appended claims.

## Claims

1. A system for detecting black ice on roads, comprising:
a radar device (110) installed on one side of a road and comprising a transmitter (111) configured to transmit radio waves toward the road and a receiver (112) configured to collect radio waves reflected from an object after transmission;
a reflector (120) installed opposite the radar device (110) with the road therebetween and having radio wave reflection characteristics; and
a controller (130) comprising a storage unit (131) and a determination unit (132), the storage unit (131) being configured to store an interference wave generated by interference between a first reflected wave directly reflected from the reflector after transmission by the transmitter (111) and a second reflected wave sequentially reflected from the reflector and the road, the determination unit (132) being configured to determine whether black ice is present by analyzing the interference wave to check a road condition.

2. The system according to claim 1, wherein:
the controller (130) further comprises a timer (133) configured to operate the radar device every set time and to store an interference wave by time, and an extraction unit (134) configured to extract a reference signal corresponding to a normal road without black ice by analyzing a change in interference wave by time; and
the determination unit (132) is configured to determine the road condition by comparing the received interference wave with the reference signal.

3. The system according to claim 1, wherein the reflector (120) is a corner reflector composed of three conductive plates (121) orthogonal to each other, and consist of a plurality of reflectors fixedly installed at set intervals along the road.

4. The system according to claim 3, wherein:
the radar device (110) further comprises a direction changing unit (113) configured to change a direction of emission and collection of radio waves in response to the installation position of each of the reflectors (120); and
the controller (130) further comprises a position check unit (135) connected to the direction change unit (113) to output a result of condition determination for each position of the road.

5. The system according to claim 1, wherein the controller (130) further comprises a vehicle detection unit (136) configured to detect that a vehicle approaches and passes the road to control the radar device (110) to operate when there is no vehicle.

6. The system according to claim 1, wherein the controller further comprises a collection unit (137) configured to collect weather information including temperature and humidity, and an information connection unit (138) configured to analyze the weather information to activate the radar device (110) under a condition in which black ice is likely to occur.
